# FASCICULE DE BREVET EUROPEEN

(11) **EP 3 424 118 B1**
(45) Date de publication et mention de la délivrance du brevet: **01.01.2020**
(21) Numéro de dépôt: 17713345.1
(22) Date de dépôt: 28.02.2017
(51) Int. Cl.: H02J 1/00, H02M 3/155, B64D 47/00, H02J 9/00

(54) **DISPOSITIF DE DISTRIBUTION ÉLECTRIQUE COMPRENANT AU MOINS UN CONTRÔLEUR D'ALIMENTATION**
STROMVERTEILUNGSVORRICHTUNG MIT MINDESTENS EINEM LEISTUNGSREGLER
ELECTRICAL DISTRIBUTION DEVICE COMPRISING AT LEAST ONE POWER CONTROLLER

(30) Priorité: 01.03.2016 FR 1651730
(43) Date de publication de la demande: 09.01.2019
(73) Titulaire: Safran Electrical & Power, 31702 Blagnac Cedex (FR)
(72) Inventeur: BALPE, Cédric, 31702 Blagnac Cedex (FR); PRECIAT, Philippe, 31702 Blagnac Cedex (FR); LI KU, Antonio, 31702 Blagnac Cedex (FR); CAMARA, Youssouf, 31702 Blagnac Cedex (FR)
(74) Mandataire: Cabinet Camus Lebkiri
(86) Numéro de dépôt international: PCT/FR2017/050446
(87) Numéro de publication internationale: WO 2017/149238

(56) Documents cités:
- EP-A1- 2 980 946
- WO-A2-2009/125013
- US-A1- 2004 124 703
- US-B2- 6 700 386

## Description

L'invention concerne le domaine de la distribution électrique au sein de systèmes comprenant des organes électriques (ou électroniques).

Dans certains systèmes, comme par exemple des aéronefs, il est fréquent d'utiliser des dispositifs de distribution électrique pour alimenter de nombreux organes électriques de façon contrôlée. L'invention concerne plus particulièrement les dispositifs de distribution électrique qui sont connus sous l'acronyme anglais SPDU (« Secondary Power Distribution Unit »), et qui peuvent présenter différentes architectures.

L'invention concerne encore plus particulièrement les SPDUs comprenant au moins un contrôleur d'alimentation (ou SSPC (« Solid state Power Controller ») - disjoncteur électronique contrôlable) propre à être connecté à au moins un organe électrique d'un système, au moins un contrôleur local (ou « COM & CPU ») propre à interfacer au moins un contrôleur d'alimentation avec au moins un calculateur externe du système, et au moins une voie (ou chaîne) d'alimentation locale (ou « power supply ») propre à alimenter au moins un contrôleur d'alimentation et le(s) contrôleur(s) local (locaux) à partir d'une ligne réseau électrique du système. On notera qu'un SSPC peut être agencé de manière à fournir une alimentation continue (ou DC) ou alternative (ou AC).

Dans de tels SPDUs, les contrôleurs d'alimentation (ou SSPCs) et chaque contrôleur local (ou COM & CPU) présentent une majorité de composants communs, alors que la quasi-totalité des composants des voies d'alimentation locales (ou power supplies) ne sont utilisés que par ces dernières. Cette solution ne s'avère pas optimale en termes de coûts et de rationalisation industrielle.

On identifie ici le document de brevet US 2004/124703 A1. Ledit document vise à fournir un système permettant de répartir l'énergie électrique entre les différents organes d'un véhicule, et à le distribuer par ordre de priorité entre les organes électriques. En revanche, ledit document n'enseigne pas de contrôleur d'alimentation et de contrôleur local ayant chacun un convertisseur.

L'invention a donc notamment pour but d'améliorer la situation, notamment pour optimiser et rationaliser les cartes SSPC.

Elle propose notamment à cet effet un dispositif de distribution électrique comprenant au moins un contrôleur d'alimentation propre à être connecté à au moins un organe électrique, au moins un contrôleur local propre à interfacer au moins un contrôleur d'alimentation avec au moins un calculateur externe, et au moins une voie d'alimentation locale propre à alimenter au moins un contrôleur d'alimentation et chaque contrôleur local.

Ce dispositif se caractérise par le fait que :
- chaque contrôleur d'alimentation et chaque contrôleur local comprennent chacun un convertisseur local de type DC/DC et propre à être couplé à chaque voie d'alimentation locale, et
- qu'il comprend un réservoir d'énergie couplé à chaque voie d'alimentation locale, au convertisseur local d'au moins un contrôleur d'alimentation et au convertisseur local d'au moins un contrôleur local.

Grâce à l'invention, on peut désormais s'affranchir des convertisseurs DC/DC dans chaque voie d'alimentation locale, et donc les contrôleurs d'alimentation et chaque contrôleur local peuvent être alimentés via une voie (ou chaîne) d'alimentation fortement simplifiée du système dont ils font partie, sans conversion intermédiaire, y compris en cas de problème survenant sur cette ligne du fait de la présence d'un réservoir d'énergie commun. Il en résulte, notamment, une réduction du nombre de composants utilisés, une réduction du nombre de types de composant utilisés et une réduction de l'encombrement.

Le dispositif selon l'invention peut comporter d'autres caractéristiques qui peuvent être prises séparément ou en combinaison, et notamment :
- les voies d'alimentation locales sont dépourvues de convertisseur de type DC/DC ;
- il peut comprendre un premier filtre de type dit à mode commun et mis en commun de chaque voie d'alimentation locale et/ou un second filtre de type dit à mode différentiel et mis en commun de chaque voie d'alimentation locale ;
- le réservoir d'énergie peut présenter un type choisi parmi au moins un type dit direct et un type dit commuté ;
- il peut comprendre au moins deux voies d'alimentation locales de type dit à courant continu ;
- en variante, il peut comprendre au moins une voie d'alimentation locale de type dit à courant continu, et au moins une voie d'alimentation locale de type dit à courant alternatif et comprenant un convertisseur de type AC/AC et un ensemble de composants électroniques propre à mettre en forme l'énergie issue d'un réseau alternatif pour la rendre compatible avec l'énergie issue d'un réseau continu ;
- chaque convertisseur local du contrôleur d'alimentation peut présenter un type choisi parmi (au moins) « flyback », « isolated buck », « forward », et chaque topologie dérivée de « forward » ;
- il peut comprendre un ensemble de composants électroniques propre à éviter une propagation de défaut vers l'amont de problèmes électriques survenus en aval et à prémunir d'une propagation de défaut entre voies d'alimentation locales.

L'invention propose également un système comprenant au moins un organe électrique et au moins un dispositif de distribution électrique du type de celui présenté ci-avant et couplé à au moins un organe électrique.

Un tel système peut, par exemple, être un aéronef.

D'autres caractéristiques et avantages de l'invention apparaîtront à l'examen de la description détaillée ci-après et des dessins annexés, sur lesquels :
- la figure 1 illustre de façon schématique et fonctionnelle un exemple de réalisation d'un dispositif de distribution électrique selon l'invention, et
- la figure 2 illustre de façon schématique et fonctionnelle une variante du dispositif de distribution électrique de la figure 2.

L'invention a notamment pour but de proposer un dispositif de distribution électrique DD constituant un SPDU et destiné à équiper un système pour alimenter certains des organes électriques Oi de ce dernier.

Dans ce qui suit, on considère, à titre d'exemple non limitatif, que le système est un aéronef, comme par exemple un avion. Mais l'invention n'est pas limitée à ce type de système. En effet, un dispositif de distribution électrique DD, selon l'invention, peut équiper n'importe quel système comportant des organes électriques à alimenter. Ainsi, elle concerne notamment les véhicules (terrestres, maritimes (ou fluviaux) et aériens), les installations, éventuellement industrielles, et les bâtiments.

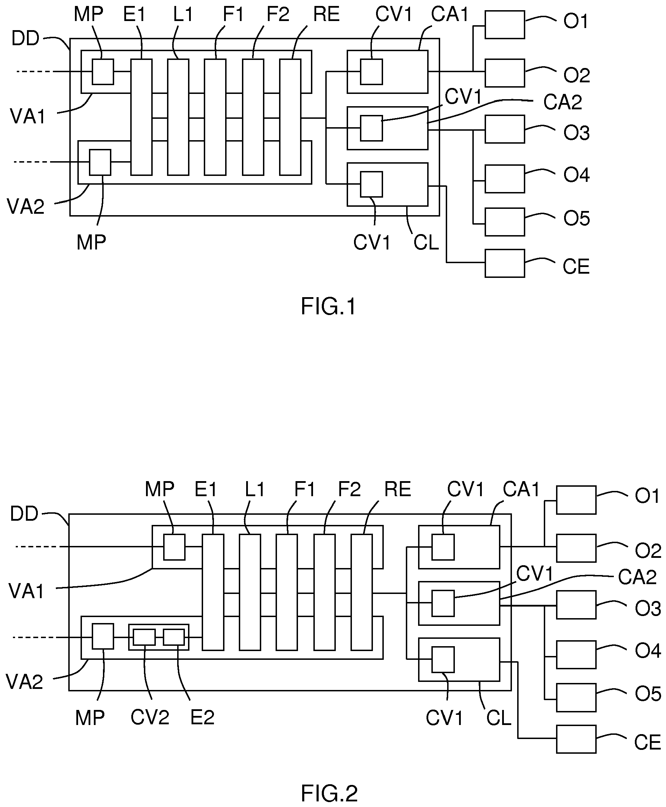

On a schématiquement illustré sur les figures 1 et 2 deux exemples de réalisation d'un dispositif de distribution électrique DD selon l'invention. Comme illustré, un dispositif (de distribution électrique) DD, selon l'invention, comprend au moins un contrôleur d'alimentation (ou SSPC (Solid state Power Controller) CAj, au moins une voie d'alimentation locale (ou power supply) VAk, au moins un contrôleur local (ou COM & CPU) CL, et un réservoir d'énergie RE.

Chaque contrôleur d'alimentation CAj est propre à être connecté à au moins un organe électrique Oi d'un système (ici un avion), comprend un convertisseur local CV1 de type DC/DC (courant continu/courant continu) et propre à être couplé (directement ou indirectement) à chaque voie d'alimentation locale VAk.

Le/chaque contrôleur local CL est propre à interfacer au moins un contrôleur d'alimentation CAj avec au moins un calculateur externe CE, comprend un convertisseur local CV1 de type DC/DC, et est propre à être couplé à au moins une voie d'alimentation locale VAk.

Dans les exemples de réalisation illustrés non limitativement sur les figures 1 et 2, le dispositif DD comprend deux voies d'alimentation locales VA1 et VA2 (k = 1 ou 2) qui sont toutes les deux couplées à deux contrôleurs d'alimentation CA1 et CA2 (j = 1 ou 2) et à un contrôleur local CL. Le premier contrôleur d'alimentation CA1 alimente ici deux organes électriques 01 et 02 (i = 1 ou 2), le second contrôleur d'alimentation CA2 alimente ici trois organes électriques 03, 04 et 05 (i = 3 à 5), et le contrôleur local CL est couplé à un unique calculateur externe CE. Mais le premier contrôleur d'alimentation CA1 pourrait alimenter un unique organe électrique ou bien plus de deux organes électriques. De même, le second contrôleur d'alimentation CA2 pourrait alimenter un ou deux organes électriques ou bien plus de trois organes électriques. Egalement de même, le contrôleur local CL pourrait être couplé à plusieurs (au moins deux) calculateurs externes. Par ailleurs, le dispositif DD pourrait comprendre plus ou moins de deux contrôleurs d'alimentation CAj (ce qui est souvent le cas, notamment dans un avion), et/ou plusieurs contrôleurs locaux CL.

Le réservoir d'énergie RE est couplé à chaque voie d'alimentation locale VAk, au convertisseur local CV1 d'au moins un contrôleur d'alimentation CAj et au convertisseur local CV1 d'au moins un contrôleur local CL.

Ce réservoir d'énergie RE est destiné à maintenir l'alimentation des contrôleurs d'alimentation CA1 et CA2 et de chaque contrôleur local CL durant un temps défini en cas d'interruption des sources externes de l'avion. La réserve d'énergie est donc pleinement destinée aux besoins internes du dispositif DD.

Le réservoir d'énergie RE peut, par exemple, comporter des condensateurs ou super condensateurs. Par ailleurs, ce réservoir d'énergie RE peut, par exemple, présenter un type dit direct ou un type dit commuté, selon les besoins.

Ce réservoir d'énergie RE peut éventuellement comprendre un convertisseur destiné à élever la tension de sa réserve d'énergie. Dans ce cas, il peut, par exemple, être de type BOOST ou BUCK-BOOST non inverseur à deux ou quatre commutateurs.

Lorsque le réservoir d'énergie RE peut gérer ou fixer la tension de sa réserve d'énergie, plusieurs stratégies de gestion peuvent être mises en œuvre lors de transitoires de faible amplitude du réseau électrique avion. Ainsi, on peut, par exemple, effectuer une élévation de tension permanente pour obtenir une tension de réserve d'énergie régulée au-delà de l'amplitude maximale du réseau électrique avion, ou bien une élévation intermédiaire, éventuellement combinée à un mode « suiveur » (de non conversion) lors de transitoires supérieurs à la tension de régulation de la réserve d'énergie.

Il est important de noter que chaque voie d'alimentation locale VAk est dépourvue de convertisseur de type DC/DC.

Chaque convertisseur DC/DC d'un contrôleur d'alimentation CAj ou d'un contrôleur local CL est donc agencé de manière à pouvoir être alimenté « directement » via une ligne réseau électrique de son système, sans conversion intermédiaire, excepté pour les conversions associées à certaines variantes de la réserve d'énergie. Cela permet de s'affranchir des convertisseurs DC/DC dans chaque voie d'alimentation locale VAk, et donc de réduire non seulement le nombre de composants utilisés dans le dispositif DD, mais également le nombre de types de composant utilisés dans le dispositif DD et l'encombrement du dispositif DD. Cela s'avère avantageux en termes de coûts, de rationalisation industrielle et de possibilités d'implantation.

On notera, comme illustré non limitativement sur les figures 1 et 2, que le dispositif DD peut éventuellement comprendre, par exemple en amont du réservoir d'énergie RE, un premier filtre F1 de type dit à mode commun et mis en commun de chaque voie d'alimentation locale VAk, et/ou un second filtre F2 de type dit à mode différentiel et mis en commun de chaque voie d'alimentation locale VAk.

Ce premier filtre F1 est destiné à filtrer les perturbations de mode commun, tandis que le second filtre F2 est destiné à filtrer les perturbations de mode différentiel.

On notera également, comme illustré non limitativement sur les figures 1 et 2, que le dispositif DD peut éventuellement comprendre, en amont de son éventuel premier filtre F1, un ensemble de composants électroniques E1 destiné à éviter une propagation de défaut vers l'amont (et donc vers le réseau électrique avion) de problèmes électriques survenus en aval (par exemple dans une voie d'alimentation locale VAk ou un organe électrique Oi), comme par exemple en cas de court-circuit, ainsi qu'à prémunir d'une propagation de défaut entre les voies d'alimentation locales VAk (lorsque le dispositif DD en comprend plusieurs).

Cet ensemble de composants électroniques E1 constitue une interface de type N vers 1, où N est le nombre de voies d'alimentation locales VAk. Cette interface E1 peut, par exemple, comprendre N fonctions OU à diodes. Lorsque N = 2, comme illustré non limitativement, on a une interface E1 de type 2 vers 1, par exemple comprenant deux fonctions OU à diodes.

On notera également, comme illustré non limitativement sur les figures 1 et 2, que le dispositif DD peut éventuellement comprendre, par exemple entre son éventuel ensemble E1 et son éventuel premier filtre F1, un limiteur de courant L1 mis en commun de chaque voie d'alimentation locale VAk. Ce limiteur de courant L1 est plus particulièrement utile lorsque la réserve d'énergie RE comprend principalement des condensateurs ou super condensateurs, sans moyens propres à gérer ou fixer la tension.

On notera également, comme illustré non limitativement sur les figures 1 et 2, que chaque voie d'alimentation locale VAk peut éventuellement comprendre en entrée (en amont de l'éventuel ensemble E1) un module de protection MP, de préférence pas mis en commun, et destiné à détourner (ou diriger) vers la structure (ici de l'avion) les impulsions électriques dangereuses provenant du réseau électrique avion. Le module de protection MP doit être placé le plus proche possible des interfaces physiques (connecteurs) et doit donc être dédié à une interface avec une source avion externe.

Dans l'exemple de la figure 1 le dispositif DD comprend deux voies d'alimentation locales VA1 et VA2 (k = 1 ou 2) de type dit à courant continu (ou DC) dont la plupart des éléments fonctionnels (RE et éventuellement E1, L1, F1 et F2), hormis leurs éventuels modules de protection MP respectifs, sont mis en commun. Mais le dispositif DD pourrait comporter plus ou moins de deux voies d'alimentation locales VAk de type dit à courant continu. Cet agencement de la figure 1 est adapté à l'alimentation continue (ou DC) d'organes électriques.

Dans l'exemple de la figure 2 le dispositif DD comprend une voie d'alimentation locale VA1 (k = 1) de type dit à courant continu et une voie d'alimentation locale VA2 (k = 2) de type dit à courant alternatif (ou AC) qui ont en commun plusieurs éléments fonctionnels (RE et éventuellement E1, L1, F1 et F2). Cela permet d'alimenter certains organes électriques Oi en courant continu et certains autres organes électriques Oi' (i' ≠ i) en courant alternatif en fonction de leurs agencements respectifs.

La voie d'alimentation locale VA1 (de type DC) est similaire à celle décrite plus haut en référence à la figure 1. Par conséquent, tout ce qui a été dit précédemment à propos de la voie d'alimentation locale VA1 de la figure 1 s'applique également à la voie d'alimentation locale VA1 de la figure 2. La voie d'alimentation locale VA2 (de type AC) comprend notamment un convertisseur CV2 de type AC/AC et un ensemble de composants électroniques E2 destiné à mettre en forme l'énergie issue du réseau alternatif (AC) de l'avion pour la rendre compatible avec l'énergie issue du réseau continu (DC) de l'avion. L'ensemble de composants électroniques E2 peut, par exemple, constituer au moins un redressement à diodes. Un tel convertisseur CV2 constitue alors avec l'ensemble de composants électroniques E2 ce que l'homme de l'art appelle parfois un convertisseur de type AC(TRI)/DC. Dans un autre mode de réalisation, l'ensemble de composants électronique E2 peut, par exemple, être un redresseur à six diodes associé à des filtres, le convertisseur CV2 étant alors par exemple un convertisseur DC/DC.

Comme la voie d'alimentation locale VA1, la voie d'alimentation locale VA2 peut également comprendre un éventuel module de protection MP (similaire à celui décrit plus haut) en amont du convertisseur CV2.

Dans les exemples des figures 1 et 2, chaque convertisseur local CV1 peut, par exemple, être de type « flyback » ou « isolated buck » (ou « buck avec enroulement auxiliaire isolé ») ou « forward » ou de n'importe quelle topologie dérivée du type forward (comme par exemple « single switch forward », « two switches forward », « push pull », « half bridge » ou « full bridge »).

D'une manière générale, chaque convertisseur local CV1 est préférentiellement constitué de composants électroniques intégrés tolérant une large plage de tension d'entrée (comme c'est notamment le cas sur un réseau électrique d'un système tel qu'un avion).

On notera que le dispositif DD pourrait comporter plus d'une voie d'alimentation locale à courant continu (DC) et/ou plus d'une voie d'alimentation locale à courant alternatif (AC).

L'invention offre plusieurs avantages, parmi lesquels :
- une suppression des convertisseurs d'alimentation centralisés qui permet une connexion directe des contrôleurs d'alimentation (ou SSPCs) et du contrôleur local au réseau électrique du système pour prélever l'énergie dont ils ont besoin sans conversion d'énergie électrique intermédiaire,
- une adaptation possible aux alimentations alternatives (AC) par insertion d'un convertisseur de type AC(Tri)/DC dont la tension de sortie est similaire au réseau électrique du système, de manière à standardiser chaque convertisseur DC/DC au sein des contrôleurs d'alimentation CAj. Cette adaptation peut, dans le cas d'une association de carte DC et de carte AC (siège de pertes plus importantes que la carte DC) et d'un dimensionnement du convertisseur AC(Tri)/DC pour qu'il génère nominalement une tension inférieure à celle du réseau électrique DC du système, permettre aux SSPCs et contrôleur local des deux cartes AC et DC de consommer en priorité sur le réseau électrique DC afin de ne pas générer de perte au sein du convertisseur AC(Tri)/DC additionnel et de la carte AC. On comprendra en effet que cela permettrait de réduire les pertes des cartes AC en les déplaçant en condition normale vers les cartes DC et donc d'homogénéiser la répartition des pertes entre cartes DC et AC.

L'invention ne se limite pas aux modes de réalisation de dispositif de distribution électrique et de système décrits ci-avant, seulement à titre d'exemple, mais elle englobe toutes les variantes que pourra envisager l'homme de l'art dans le seul cadre des revendications ci-après.

## Revendications

1. Dispositif de distribution électrique (DD) comprenant :
- au moins un contrôleur d'alimentation (CAj) propre à être connecté à au moins un organe électrique (Oi),
- au moins un contrôleur local (CL) propre à interfacer au moins un contrôleur d'alimentation (CAj) avec au moins un calculateur externe (CE), et
- des voies d'alimentation locales (VAk) propres à alimenter ledit au moins un contrôleur d'alimentation (CAj) et ledit au moins un contrôleur local (CL),
**caractérisé en ce que** ledit au moins un contrôleur d'alimentation (CAj) et ledit au moins un contrôleur local (CL) comprennent chacun un convertisseur local (CV1) de type DC/DC propre à être couplé aux voies d'alimentation locales (VAk), et
le dispositif comprenant en outre un réservoir d'énergie (RE) couplé aux voies d'alimentation locales (VAk), au convertisseur local (CV1) dudit au moins un contrôleur d'alimentation (CAj) et au convertisseur local (CV1) dudit au moins un contrôleur local (CL).

2. Dispositif selon la revendication 1 dans lequel les voies d'alimentation locales (VAk) sont dépourvues de convertisseur de type DC/DC.

3. Dispositif selon la revendication 1 ou 2 comprenant en outre un premier filtre (F1) de type dit à mode commun qui est mis en commun entre les voies d'alimentation locales (VAk) et/ou un second filtre (F2) de type dit à mode différentiel qui est mis en commun entre les voies d'alimentation locales (VAk).

4. Dispositif selon l'une des revendications 1 à 3 dans lequel le réservoir d'énergie (RE) est de type direct ou de type commuté.

5. Dispositif selon l'une des revendications 1 à 4, dans lequel au moins deux voies d'alimentation locales (VAk) sont de type dit à courant continu.

6. Dispositif selon l'une des revendications 1 à 5, dans lequel au moins une voie d'alimentation locale (SA1) est de type dit à courant continu, et au moins une voie d'alimentation locale (SA2) est de type dit à courant alternatif, ledit dispositif comprenant en outre un convertisseur (CV2) de type AC/AC et un ensemble de composants électroniques (E2) propre à mettre en forme l'énergie issue d'un réseau alternatif pour la rendre compatible avec l'énergie issue d'un réseau continu.

7. Dispositif selon l'une des revendications 1 à 6, dans lequel chaque convertisseur local (CV1) est de type « flyback », ou « isolated buck », ou « forward » et chaque dérivé du type « forward ».

8. Dispositif selon l'une des revendications 1 à 7 comprenant en outre un ensemble de composants électroniques (E1) à diodes adapté pour éviter une propagation vers l'amont de défauts électriques de type court-circuit ou autre survenant en aval et pour prévenir une propagation de tels défauts électriques entre les voies d'alimentation locales (VAk).

9. Système comprenant au moins un organe électrique (Oi), **caractérisé en ce qu'**il comprend en outre au moins un dispositif de distribution électrique (DD) selon l'une des revendications précédentes couplé à au moins un organe électrique (Oi).

## Patentansprüche

1. Elektrische Schaltanlagen-Vorrichtung (DD), umfassend:
- wenigstens eine Versorgungssteuerung (CAj), die geeignet ist, an wenigstens ein elektrisches Organ (Oi) angeschlossen zu sein;
- wenigstens eine lokale Steuerung (CL), die geeignet ist, eine Schnittstelle mit wenigstens einer Versorgungssteuerung (CAj) und wenigstens einem externen Rechner (CE) zu bilden und
- lokale Versorgungswege (VAk), die geeignet sind, um die genannte wenigstens eine Versorgungssteuerung (CAj) und die wenigstens eine lokale Steuerung (CL) zu versorgen,
**dadurch gekennzeichnet, dass** die wenigstens eine Versorgungssteuerung (CAj) und die wenigstens eine lokale Steuerung (CL) jeweils einen lokalen Wandler (CV1) vom Typ DC/DC umfassen, die geeignet ist, an die lokalen Versorgungswege (VAk) angeschlossen zu sein, und wobei die Vorrichtung darüber hinaus einen Energiespeicher (RE) umfasst, der an die lokalen Versorgungswege (VAk), an den lokalen Wandler (CV1) der genannten wenigstens einen Versorgungssteuerung (CAj) und an den lokalen Wandler (CV1) der genannten wenigstens einen lokalen Steuerung (CL) angeschlossen ist.

2. Vorrichtung gemäß Anspruch 1, bei der die lokalen Versorgungswege (VAk) keinen Wandler vom Typ DC/DC aufweisen.

3. Vorrichtung gemäß Anspruch 1 oder 2, umfassend darüber hinaus einen ersten Filter (F1) vom sogenannten Gleichtakttyp, der zwischen den lokalen Versorgungswegen (VAk) und / oder einem zweiten Filter (F2) vom sogenannten Gegentakttyp zusammengeschaltet ist, der zwischen den lokalen Versorgungswegen (VAk) zusammengeschaltet ist.

4. Vorrichtung gemäß einem der Ansprüche 1 bis 3, bei der der Energiespeicher (RE) vom direkten Typ oder vom geschalteten Typ ist.

5. Vorrichtung gemäß einem der Ansprüche 1 bis 4, bei der wenigstens zwei lokale Versorgungswege (VAk) vom sogenannten Gleichstromtyp sind.

6. Vorrichtung gemäß einem der Ansprüche 1 bis 5, bei der wenigstens ein lokaler Versorgungsweg (SA1) vom sogenannten Gleichstromtyp ist und wenigstens ein lokaler Versorgungsweg (SA2) vom sogenannten Wechselstromtyp ist, wobei die genannte Vorrichtung darüber hinaus einen Wandler (CV2) vom Typ AC/AC und eine Gruppe von elektronischen Bauteilen (E2) umfasst, die geeignet ist, um die Energie in Form zu bringen, die aus einem Wechselstromnetz stammt, um sie mit der Energie kompatibel zu machen, die aus einem Gleichstromnetz stammt.

7. Vorrichtung gemäß einem der Ansprüche 1 bis 6, bei der jeder lokale Wandler (CV1) vom Typ "Flyback" oder "isolated Buck" oder "forward" und jede Ableitung vom Typ "forward" ist.

8. Vorrichtung gemäß einem der Ansprüche 1 bis 7, umfassend darüber hinaus eine Gruppe von elektronischen Bauteilen (E1) mit Dioden, die geeignet ist, um eine Verbreitung von elektrischen Fehlern vom Typ Kurzschluss oder sonstige zu vermeiden, die nachgeschaltet auftreten, und um vor einer Verbreitung derartiger elektrischer Fehler zwischen den lokalen Versorgungswegen (VAk) vorzubeugen.

9. System, umfassend wenigstens ein elektrisches Organ (Oi), **dadurch gekennzeichnet, dass** es darüber hinaus wenigstens eine elektrische Schaltanlagen-Vorrichtung (DD) gemäß irgendeinem der voranstehenden Ansprüche umfasst, die an wenigstens ein elektrisches Organ (Oi) gekoppelt ist.

## Claims

1. Electrical distribution device (DD) including:
- at least one power controller (CAj) that can be connected to at least one electrical component (Oi),
- at least one local controller (CL) that can interface at least one power controller (CAj) with at least one external calculator (CE), and
- local power supply paths (VAk) that can supply said at least one power controller (CAj) and said at least one local controller (CL),
**characterised in that** said at least one power controller (CAj) and said at least one local controller (CL) each include a DC/DC type local converter (CV1) that can be coupled to the local power supply paths (VAk), and
the device further including an energy reservoir (RE) coupled to the local power supply paths (VAk), to the local converter (CV1) of said at least one power controller (CAj) and to the local converter (CV1) of said at least one local controller (CL).

2. Device according to claim 1 in which the local power supply paths (VAk) are without DC/DC type converter.

3. Device according to claim 1 or 2 further including a first so-called common mode type filter (F1) which is mutualised between the local power supply paths (VAk) and/or a second so-called differential mode type filter (F2) which is mutualised between the local power supply paths (VAk).

4. Device according to one of claims 1 to 3 wherein the energy reservoir (RE) is of direct type or commuted type.

5. Device according to one of claims 1 to 4, wherein at least two local power supply paths (VAk) are of so-called direct current type.

6. Device according to one of claims 1 to 5, wherein at least one local power supply path (SA1) is of so-called direct current type, and at least one local power supply path (SA2) is of so-called alternating current type, said device further including an AC/AC type converter (CV2) and a set of electronic components (E2) that can shape the energy coming from an alternating current network to make it compatible with the energy coming from a direct current network.

7. Device according to one of claims 1 to 6, wherein each local converter (CV1) is of "flyback", or "isolated buck", or "forward" type and each derivative of the "forward" type.

8. Device according to one of claims 1 to 7 further including a set of electronic components (E1) with diodes suited to avoiding upstream propagation of short-circuits or other types of electrical faults occurring downstream and preventing propagation of such electrical faults between the local power supply paths (VAk).

9. System including at least one electrical component (Oi), **characterised in that** it further includes at least one electrical distribution device (DD) according to one of the preceding claims coupled to at least one electrical component (Oi).
